# EUROPEAN PATENT SPECIFICATION

(11) **EP 4 549 114 B1**
(45) Date of publication and mention of the grant of the patent: **07.10.2026**
(21) Application number: 24196858.5
(22) Date of filing: 28.08.2024
(51) Int. Cl.: B26F 1/40, B21D 28/04, H01M 4/02

(54) **ELECTRODE PLATE PROCESSING APPARATUS AND METHOD**
VORRICHTUNG UND VERFAHREN ZUR ELEKTRODENPLATTENVERARBEITUNG
APPAREIL ET PROCÉDÉ DE TRAITEMENT DE PLAQUE D'ÉLECTRODE

(30) Priority: 03.11.2023 KR 20230151074
(43) Date of publication of application: 07.05.2025
(73) Proprietor: SAMSUNG SDI CO., LTD., Giheung-gu Yongin-si, Gyeonggi-do 17084 (KR)
(72) Inventor: Cho, Junhaeng, 17084 Yongin-si, Gyeonggi-do (KR); Shin, Yongseung, 17084 Yongin-si, Gyeonggi-do (KR); Lim, Hee Taek, 16678 Suwon-si, Gyeonggi-do (KR); Jung, Sungkyun, 17084 Yongin-si, Gyeonggi-do (KR); Lee, Seungjun, 17084 Yongin-si, Gyeonggi-do (KR)
(74) Representative: Gulde & Partner

(56) References cited:
- EP-A1- 4 467 300
- KR-B1- 101 691 937
- KR-B1- 102 475 580
- US-A1- 2010 018 374

## Description

### BACKGROUND

### 1. Field

The present disclosure relates to an electrode plate processing apparatus and a manufacturing method for an electrode plate.

### 2. Description of the Related Art

Unlike primary batteries that are not designed to be (re)charged, secondary (or rechargeable) batteries are batteries that are designed to be discharged and recharged. A low-capacity rechargeable battery where one electrode assembly is packaged in a pack may be used in a small and portable electronic device such as a mobile phone or a camcorder, and a large-capacity rechargeable battery where dozens of electrode assemblies are connected to each other may be widely used as a power source for driving a motor of an electric scooter, a hybrid vehicle, an electric vehicle, or the like.

A rechargeable battery typically includes electrode plates. Such electrode plates, for example, are manufactured by means of a shear mold (i.e. a mold for shearing or die cutting a plate-shaped workpiece). This shear mold typically includes a punch and a die. The punch (e.g. a moving blade) is used to push a workpiece against the die, which is stationary (e.g. a fixed blade).The distance between the shearing surfaces (or shearing edges) of the punch and the die is referred to as a clearance.

The clearance represents an important factor when designing the mold. For example, an inappropriate clearance may cause the shear surface of the workpiece to be uneven and may cause raised edges or small pieces of material (so-called burr) to remain attached to the workpiece after the shearing process, which results in lower overall quality of the product and/or shorter lifespan of the mold.

The thinnest part of an electrode, which can be produced by shearing, may be the metal substrate of the electrode, wherein said metal substrate may have a thickness of about 10 µm. In the shearing process, the clearance has a correspondingly small value in order to shear the electrode without any burr occurring on the shear surface of the electrode. Conventional measurement equipment cannot measure the clearance of a precisely manufactured shear mold for preparation of electrodes of a rechargeable battery. Therefore, the clearance has been measured based on the precision of a processing machine that processes the mold.

In addition, the clearance between the punch and the die may slightly change during a repetitive shearing process after the clearance was set in the beginning of the operation. However, conventional measurement equipment cannot detect this change in real time, which caused defect manufacturing products.

Document KR 101 691 937 B1 discloses an electrode plate processing apparatus comprising:a punch configured to cut an electrode plate; a die configured to seat the electrode plate thereon and to accommodate the punch and a clearance adjustment unit installed on the die, and configured to adjust a clearance between the punch and the die by pressing the punch.

The above information disclosed in this Background section is only for enhancement of understanding of the background and therefore the information discussed in this Background section does not necessarily constitute prior art.

### SUMMARY

The aspects of the present disclosure relate to an electrode plate processing apparatus and a manufacturing method for an electrode plate, which may measure a clearance of a mold, which is used to manufacture an electrode of a rechargeable battery.

However, the characteristics of embodiments according to the present disclosure are not limited to the aforementioned characteristics, and any other characteristics of embodiments according to the present disclosure that are not mentioned herein will be more clearly understood by those skilled in the art from the following description of embodiments according to the present disclosure.

A first aspect of the present disclosure relates to an embodiment of an electrode plate processing apparatus, which includes: a punch configured to cut an electrode plate; a die configured to seat the electrode plate thereon and to accommodate the punch; a pressure measurement member installed on at least one of the punch or the die, wherein the pressure measurement member is configured to measure a pressure applied to the punch or the die in a process in which the punch is lowered; a clearance adjustment unit installed on the die, wherein the clearance adjustment unit is configured to adjust a clearance between the punch and the die by pressing (e.g. contacting and moving) the punch; and a control unit configured to control an operation of the clearance adjustment unit based on the pressure measured by the pressure measurement member.

Preferably, the punch may include a cutting part (e.g. a movable blade) configured to cut the electrode plate, and a guide part attached (e.g. mounted) to at least one side of the cutting part. The guide part may be configured to be moved together with the cutting part when an external force is applied thereto. In other words, the punch may be movable along at least two orthogonal directional axes (e.g. movement along one of the two directional axes corresponding to an up- and down movement of the punch for pushing the electrode plate into the die) and may comprise a cutting part (e.g. a blade) for cutting the electrode plate, and a guide part attached to at least on one side of the cutting part and being contactable with the clearance adjustment unit. Preferably, the die may be stationary, wherein the punch is movable.

Preferably, the die may include an accommodation space for accommodating the punch (when the punch is moved into the die), and an (separate) adjustment space for accommodating the guide part.

Preferably, the electrode plate processing apparatus comprises a plurality of the pressure measurement members being installed on both the punch and the die. This allows higher precision in detecting pressure deviations during the process.

According to a preferred embodiment, the electrode plate processing apparatus may include: a (e.g. movable) punch including a cutting part configured to cut an electrode plate and a guide part attached to at least on one side of the cutting part and being configured to be moved together with the cutting part when an external force is applied thereto; a (e.g. stationary) die including an accommodation space for accommodating the punch (when the punch is moved into the die) and an adjustment space for accommodating the guide part of the punch; a pressure measurement member installed on at least one of the punch or the die, and being configured to measure a pressure generated in a process in which the punch is lowered; a clearance adjustment unit installed on the die, and being configured to adjust a clearance between the punch and the die by pressing (e.g. contacting and moving) the guide part; and a control unit configured to control an operation of the clearance adjustment unit based on the pressure measured by the pressure measurement member.

In the embodiments above, the clearance adjustment unit may include a first pressing member configured to press against one side of the punch (e.g. against the guide part of the punch) in a first direction, an elastic member configured to generate an elastic force toward the first pressing member, a second pressing member spaced apart from the first pressing member and configured to press a other side of the punch (e.g. against the guide part of the punch) in a second direction opposite to the first direction, and a power generating member reciprocating the second pressing member for the second pressing member to be moved to be closer to or further away from the first pressing member. In other words, the power generating member may be configured to push the second pressing member towards the first pressing member or to pull the second pressing member away from the first pressing member.

According to some embodiments, the first pressing member is arranged for at least a portion of its end to be exposed to the adjustment space.

Preferably, the control unit may be configured to control the clearance adjustment unit to increase the clearance between the punch and the die when the pressure measured by the pressure measurement member is more than a target pressure. Most preferably, the control unit may be configured to control the power generating member of the clearance adjustment unit to reduce or increase the clearance by pushing or pulling the second pressing member.

For example, the control unit may be configured to control the clearance adjustment unit to reduce the clearance between the punch and the die when the pressure measured by the pressure measurement member is less than a target pressure.

For example, the control unit may be configured to control the clearance adjustment unit to maintain the clearance between the punch and the die when the pressure measured by the pressure measurement member is the same as a target pressure.

According to some embodiments, the pressure measurement members may be installed on both the punch and the die.

For example, the pressure measured by the pressure measurement member may have a maximum value among values of the pressure applied to any one of the punch and the die in the process in which the punch is lowered.

According to some embodiments, a lower side of the guide part that is in contact with the clearance adjustment unit may have a gradually smaller width. In other words, the guide part may comprise a contacting part configured to be directly contactable with the clearance adjustment unit (e.g. with the first pressing member and/or the second pressing member) and the contacting part has a tapered end. This may prevent or reduce the potential of tilting with the clearance adjustment unit and may allow a finer adjustment of the clearance,

A second aspect of the present disclosure relates to an implementation of a manufacturing method for an electrode plate. The method includes: a first punch-lowering step of lowering a punch into the die a first time, preferably into the accommodation space of the die; a pressure measurement step of measuring a pressure applied to one selected from the punch and a die (by means of a pressure measurement member) in a process in which the punch is lowered; a determination step of determining a clearance state (by means of a control unit) by comparing a target pressure with the pressure measured in the pressure measurement step; a clearance adjustment step of adjusting or maintaining a clearance between the punch and the die (by means of a clearance adjustment unit) based on a result of comparing the measured pressure with the target pressure (determined by the control unit); and a second punch-lowering step of lowering the punch into the die a second time, preferably into the accommodation space of the die.

According to some implementations, the second punch-lowering step may be performed without adjusting the clearance (i.e. maintaining the clearance) in the clearance adjustment step when the pressure measured in the pressure measurement step is the same as the target pressure.

According to some implementations, the clearance adjustment step may be performed to increase or reduce the clearance when the pressure measured in the pressure measurement step is different from the target pressure.

According to some implementations, the method may further include a punch-lifting step of lifting the punch when the pressure measured in the pressure measurement step is higher than the target pressure.

Preferably then, the clearance adjustment step may be performed to increase the clearance after the punch-lifting step is performed when the pressure measured in the pressure measurement step is higher than the target pressure.

According to some implementations, the clearance adjustment step may be performed to reduce the clearance when the pressure measured in the pressure measurement step is lower than the target pressure.

As set forth above, the electrode plate processing apparatus according to embodiments of the present disclosure may have the clearance adjusted by the clearance adjustment unit based on the pressure measured by the pressure measurement member. The clearance adjustment process may be performed not only in the initial setting process of the electrode plate processing apparatus, but also in the middle of the process of manufacturing the electrode plate of the rechargeable battery, which is the manufacturing target.

In addition, the electrode plate processing apparatus according to some embodiments of the present disclosure may detect the slight change in the clearance during the repetitive shearing process after the clearance between the punch and the die is set at the beginning of the operation. Accordingly, the electrode plate processing apparatus according to some embodiments of the present disclosure may prevent or reduce occurring of burr on the shear surface of the electrode plate, thus preventing or reducing the manufacture of the defect products. The electrode plate processing apparatus according to some embodiments of the present disclosure may also prevent or reduce any damage to the punch or the die.

### BRIEF DESCRIPTION OF THE DRAWINGS

The following drawings accompanying the specification illustrate aspects of some embodiments of the present disclosure, and serve to allow the technical idea of the present disclosure to be better understood together with the detailed description of the present disclosure described below. Therefore, embodiments according to the present disclosure should not be construed as limited to the matters described with reference to the drawings.
FIG. 1 is a perspective view showing an electrode plate processing apparatus according to some embodiments of the present disclosure.
FIG. 2 is a side view showing the electrode plate processing apparatus of FIG. 1 according to some embodiments of the present disclosure.
FIG. 3 is a side view showing a state where a pressure measurement member is installed on a die according to some embodiments of the present disclosure.
FIG. 4 is a side view showing a state where the pressure measurement member is installed on each of a punch and the die according to some embodiments of the present disclosure.
FIG. 5 is a view showing a state where the punch is lowered according to some embodiments of the present disclosure.
FIG. 6 is an enlarged view of an area A between the punch and die of the electrode plate processing apparatus of FIG. 5 according to some embodiments of the present disclosure.
FIG. 7 is a view showing a process in which a position of the punch is adjusted by a clearance adjustment unit according to some embodiments of the present disclosure.
FIG. 8 is an enlarged view of an area B between the punch and die of the electrode plate processing apparatus of FIG. 7 according to some embodiments of the present disclosure.
FIG. 9 is a view showing a state where the punch is continuously lowered according to some embodiments of the present disclosure.
FIG. 10 is an enlarged view of an area C between the punch and die of the electrode plate processing apparatus of FIG. 9 according to some embodiments of the present disclosure.
FIG. 11 is a flowchart showing an electrode plate processing method according to some embodiments of the present disclosure.
FIG. 12 is a flowchart showing an electrode plate processing method according to some embodiments of the present disclosure.
FIG. 13 is a side view showing a case where the punch and the die interfere with each other during an operation process of the electrode plate processing apparatus according to some embodiments of the present disclosure.
FIG. 14 is an enlarged view of an area D between the punch and die of the electrode plate processing apparatus of FIG. 13 according to some embodiments of the present disclosure.

### DETAILED DESCRIPTION

Hereinafter, aspects of some embodiments of the present disclosure are described in more detail with reference to the accompanying drawings.

In addition, terms "comprise or include" and/or "comprising or including" used in the specification specify the presence of stated shapes, numerals, steps, operations, members, elements, and/or a group thereof, and do not preclude the presence or addition of one or more other shapes, numerals, steps, operations, members, elements, and/or groups thereof.

In addition, for better understanding of the present disclosure, the accompanying drawings are not drawn to scale and the dimensions of some components may be exaggerated. In addition, the same reference numerals may be assigned to the same components in different embodiments.

It should be understood that two objects of comparison may be "substantially the same" when referred to as "the same". Therefore, "substantially the same" may include a deviation which is considered low in the art, for example, a deviation of 5% or less. In addition, the fact that a parameter is even in a region (e.g., a set or predetermined region) may indicate that the parameter is uniform from an average perspective.

Expressions "first", "second" and the like may be used to indicate various components, and do not limit the corresponding components. These terms are only used to distinguish one component from another component, and the first component may also be the second component unless specifically stated to the contrary.

Throughout the specification, each element may be a single element or a plurality of element unless specifically stated to the contrary.

It is to be understood that when any component is referred to as being located "on top (or bottom) of" or "above (or below)" another component, the component may be located "on the top (or bottom) of" another component, or may have a third component interposed between another component and any component located above (or below) another component.

In addition, when any component is described to be located "on", "connected to", or "coupled to" another component, it should be understood that any component is directly coupled or connected to another component, has a third component "interposed" therebetween, or is "in contact with", "coupled to", or "connected to" another component through the third component.

A term "and/or" used herein includes any one or all combinations of the associated listed items. In addition, the use of "may" when describing the embodiments of the present disclosure relates to "one or more embodiments of the present disclosure ". Expressions such as "one or more" and "one or more" preceding a list of elements may modify the entire list of elements and may not modify individual elements of the list.

Throughout the specification, when referring to "A and/or B", it indicates A, B, or A and B, unless specifically stated to the contrary, and when referring to "C to D", it indicates C or higher and D or lower, unless specifically stated to the contrary.

A term "use" may be considered synonymous with a term "utilize". As used herein, a term "substantially," "about," or a similar term may be used as a term of approximation rather than a term of degree, and used to consider an inherent variation in a measured or calculated value which is to be recognized by those skilled in the art.

Although the terms first, second, third, or the like may be used herein to describe various elements, components, regions, layers and/or sections, these elements, components, regions, layers and/or sections should not be limited by these terms. This term may be used to distinguish one element, component, region, layer or cross section from another element, component, region, layer or cross section. Accordingly, a first element, component, region, layer, or section discussed below may be named a second element, component, region, layer, or section without departing from the teachings of the embodiments.

For ease of explanation, a spatial relative term such as "beneath," "below," "lower," "above," "upper," or the like may be used herein in order to describe a relationship between one element or feature and another element(s) or feature(s), as shown in the drawings. Spatial relative position is to be understood to encompass different directions of a device in use or operation in addition to directions shown in the drawings. For example, when the device in the drawing is turned over, an element described as "below" or "bottom" another element may be understood to be "above" or "above" another element. Therefore, the term "below" may encompass both upward and downward directions.

The terms used herein are intended to describe the embodiments of the present disclosure and are not intended to limit embodiments according to the present disclosure.

Hereinafter, an electrode plate processing apparatus according to some embodiments of the present disclosure is described in more detail with reference to the drawings.

Herein the term clearance is understood as a distance between a shearing surface of the punch and a (complementary) shearing surface of the die.

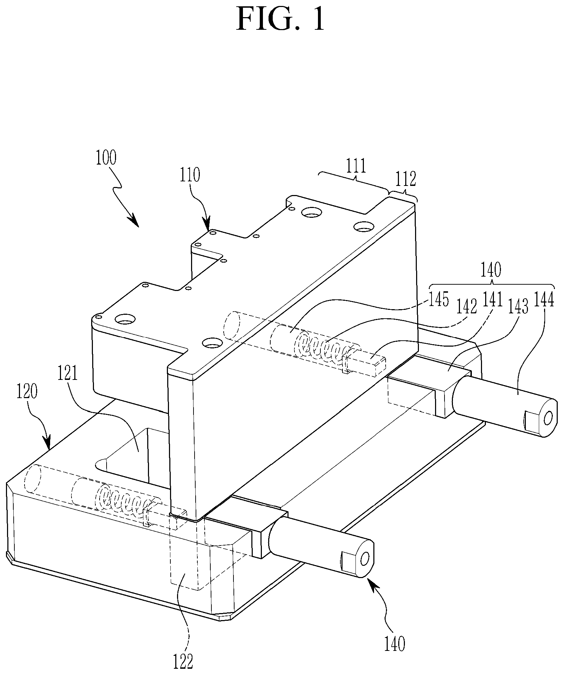

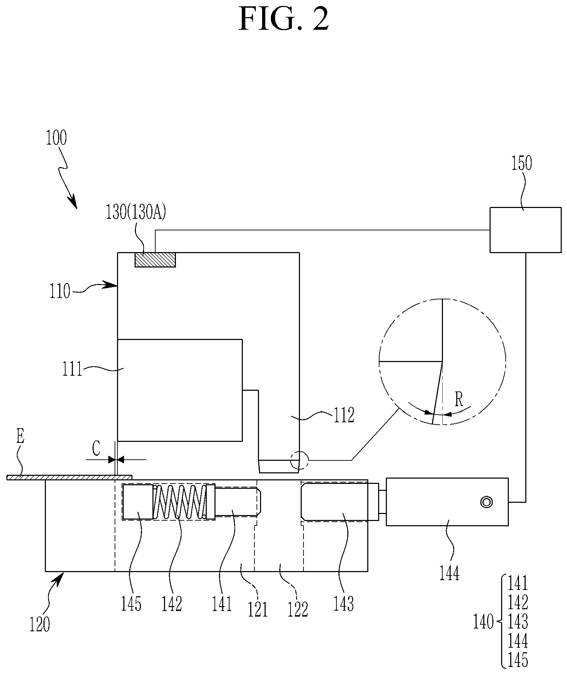

FIG. 1 is a perspective view showing an electrode plate processing apparatus according to some embodiments of the present disclosure; and FIG. 2 is a side view showing the electrode plate processing apparatus of FIG. 1.

As shown in FIGS. 1 and 2, an electrode plate processing apparatus 100 according to some embodiments of the present disclosure may include a punch 110, a die 120, a pressure measurement member 130, a clearance adjustment unit 140, and a control unit 150. The electrode plate processing apparatus 100 is an apparatus for carrying out the electrode plate processing method (S100) as described in the following.

The punch 110 may cut an electrode plate E. For this purpose, the punch 110 may include, for example, a cutting part 111 and a guide part 112. The cutting part 111 may cut the electrode plate E. The guide part 112 may be located on one side of the cutting part 111 and moved together with the cutting part 111 when an external force is applied thereto.

The cutting part 111 and the guide part 112 may be formed integrally with each other. The punch 110 may be lowered and lifted by a drive unit, and a detailed description of the drive unit for lifting and lowering the punch 110 is omitted.

The die 120 may seat the electrode plate E thereon, and accommodate the punch 110. For this purpose, the die 120 may include, for example, an accommodation space 121 accommodating the punch 110, and an adjustment space 122 accommodating the guide part 112. The adjustment space 122 and the accommodation space 121 may communicate with each other.

At least one of the punch 110 and the die 120 may be configured movable, whereas the other is stationary. Preferably, the punch 110 may be movable and the die 120 may be stationary.

The pressure measurement member 130 may be installed on at least one of the punch 110 or the die 120, and measure a pressure applied to the punch 110 or the die 120 in a process in which the punch 110 is lowered. The pressure measurement member 130 may be a pressure sensor, for example. When the pressure sensor measures the pressure of the punch 110, the pressure sensor may be installed at a connection part between the drive unit and the punch 110 to measure the pressure generated by the punch 110.

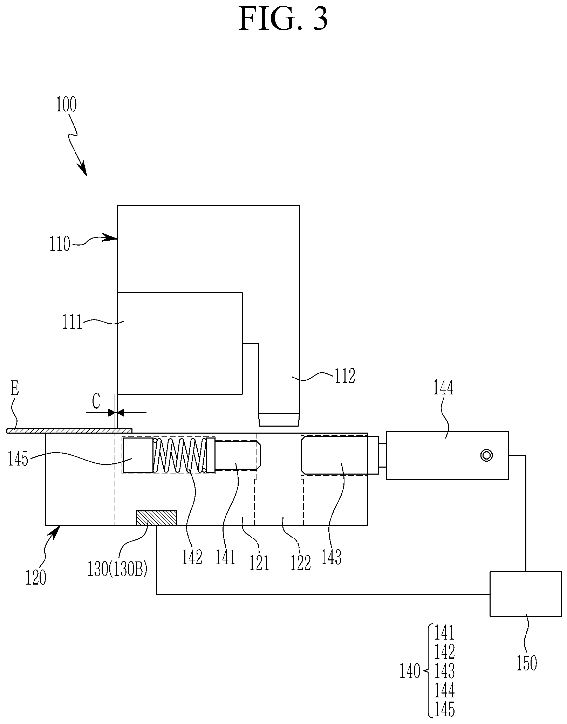

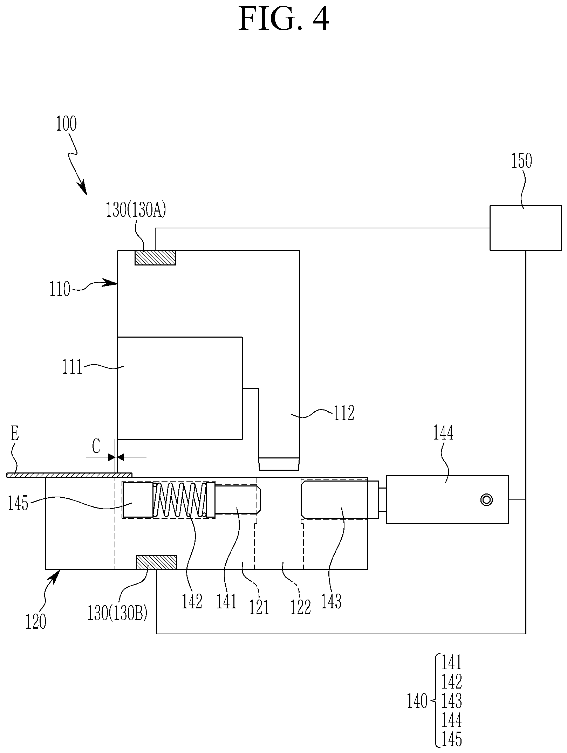

A pressure measurement member 130B may be installed not only on the punch 110 but also on the die 120 (see FIG. 3). Alternatively, the pressure measurement members 130A and 130B may be installed on both the punch 110 and the die 120 (see FIG. 4).

The pressure measured by the pressure measurement member 130 may have the maximum value among values of the pressure applied to any one selected from the punch 110 and the die 120 in the process in which the punch 110 is lowered.

The clearance adjustment unit 140 may be installed on the die 120, and adjust a clearance C between the punch 110 and the die 120 by pressing the punch 110. In more detail, the clearance adjustment unit 140 may adjust the clearance C between the punch 110 and the die 120 by pressing the guide part 112.

The control unit 150 may control an operation of the clearance adjustment unit 140 based on the pressure measured by the pressure measurement member 130. For this purpose, the control unit 150 may include, for example, a storage unit and a processing unit.

The storage unit may store the measured pressure value. The storage unit may be a memory, for example, and may be integrated into one microprocessor together with the processing unit described below.

The processing unit may compare the measured pressure with a target pressure. Here, the target pressure may be set or predetermined in the storage unit as the pressure applied to the punch 110 or the die 120 when the clearance C between the punch 110 and the die 120 is an appropriate clearance.

In addition, the processing unit may determine whether to reduce, increase, maintain the clearance C based on the measured pressure value.

A configuration where the control unit 150 controls the clearance adjustment unit 140 is described below in detail.

In the electrode plate processing apparatus 100 according to some embodiments of the present disclosure as described above, the clearance C may be adjusted by the clearance adjustment unit 140 based on the pressure measured by the pressure measurement member 130. An adjustment process of the clearance C may be performed not only in an initial setting process of the electrode plate processing apparatus 100, but also in the middle of a process of manufacturing the electrode plate E of the rechargeable battery, which is a manufacturing target.

In addition, the electrode plate processing apparatus 100 may detect a slight change in the clearance C during a repetitive shearing process after the clearance C between the punch 110 and the die 120 is set at the beginning of the operation. Accordingly, the electrode plate processing apparatus may minimize or reduce instances of (or a size of) a burr occurring on a shear surface of the electrode plate E, thus preventing or reducing manufacturing defects. The electrode plate processing apparatus may also prevent or reduce any damage to the punch 110 or the die 120.

Meanwhile, the clearance adjustment unit 140 described above may include, for example, a first pressing member 141, an elastic member 142, a second pressing member 143, and a power generating member 144.

The first pressing member 141 may press one side of the punch 110. The first pressing member 141 may press a left side of the guide part 112 of the punch 110 based on a direction shown in the drawing. For this purpose, the first pressing member 141 may be formed for at least a portion of its end to be exposed to the adjustment space 122.

The elastic member 142 may generate an elastic force toward the first pressing member 141. For this purpose, the elastic member 142 may be, for example, a compression spring. The elastic member 142 may be compressed by a pressure (e.g., a set or predetermined pressure) and then installed in the die 120.

For example, the first pressing member 141 and the elastic member 142 may be installed in the die 120 by providing an installation space in the die 120, and sequentially installing the first pressing member 141 and the elastic member 142 through the installation space from the outside. Next, the installation space may be closed using a sealing member 145.

The second pressing member may be spaced apart from the first pressing member 141, and press the other side of the punch 110. The second pressing member 143 may press a right side of the guide part 112 of the punch 110 based on the direction shown in the drawing. A force with which the second pressing member 143 presses the guide part 112 may be greater than the elastic force of the elastic member 142.

As described above, the first pressing member 141 may be always press the left side of the guide part 112. Therefore, the punch 110 may be moved to the left side (or the direction shown in the drawing) when the second pressing member 143 does not press the guide part 112. In addition, the punch 110 may be moved to the right side (or the direction shown in the drawing) when the second pressing member 143 presses the guide part 112.

The power generating member 144 may reciprocate the second pressing member 143 in a straight line for the second pressing member 143 to be moved to be closer to or further away from the first pressing member 141.

The clearance adjustment unit 140 may increase or reduce the clearance C between the punch 110 and the die 120 by moving the punch 110.

Meanwhile, a lower side of the guide part 112 of the punch 110 described above that is in contact with the clearance adjustment unit 140 may have a gradually smaller width. That is, a portion of the lower side of the guide part 112 may have an inclination. The inclination may have an inclination angle R of 20 degrees (or about 20 degrees). Accordingly, the punch 110 may be relatively smoothly moved in a process in which the first pressing member 141 and second pressing member 143 of the clearance adjustment unit 140 come into contact with the punch 110.

Meanwhile, the control unit 150 may control the clearance adjustment unit 140 to increase the clearance C between the punch 110 and the die 120 when the pressure measured by the pressure measurement member 130 is more than the target pressure.

On the other hand, the control unit 150 may control the clearance adjustment unit 140 to reduce the clearance C between the punch 110 and the die 120 when the pressure measured by the pressure measurement member 130 is less than the target pressure.

In addition, the control unit 150 may control the clearance adjustment unit 140 to maintain the clearance C between the punch 110 and the die 120 when the pressure measured by the pressure measurement member 130 is the same as the target pressure.

Meanwhile, the thinnest part of the electrode plate of a general rechargeable battery where shear occurs may be a metal substrate, and the metal substrate may be manufactured to have a very small thickness of about 10 µm. Therefore, the clearance may be processed to have a significantly low value in order to shear the electrode without any burr occurring on the shear surface of the electrode. In this case, an appropriate clearance between the punch and the die may be about 1 µm to 2 µm.

The pressure measured by the pressure measurement member 130 may be included within a target pressure range when the clearance between the punch 110 and the die 120 is the appropriate clearance in the process in which the punch 110 is lowered.

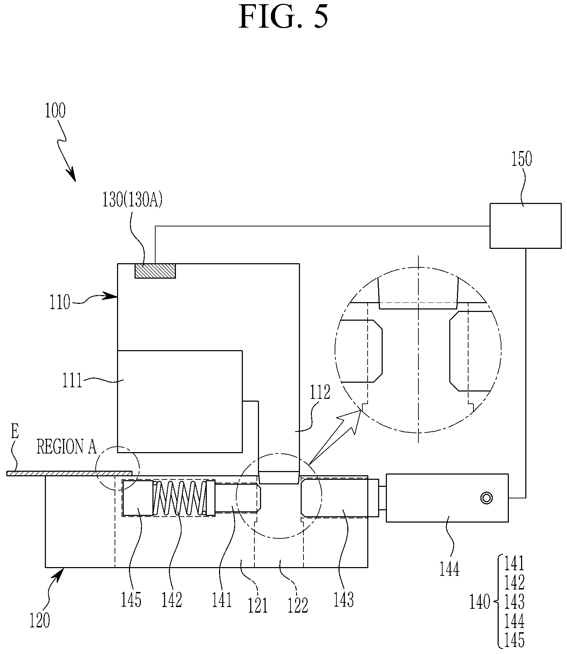

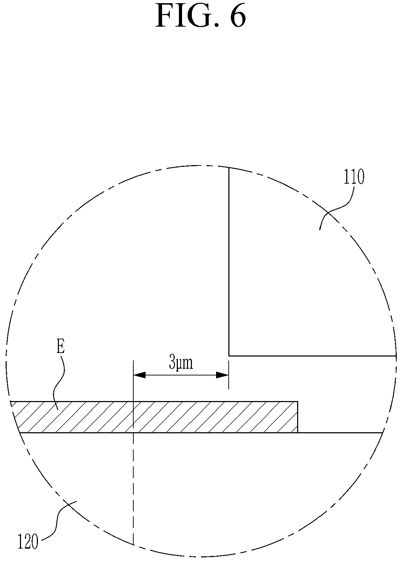

FIG. 5 is a view showing a state where the punch is lowered; and FIG. 6 is an enlarged view of an area A between the punch and die of the electrode plate processing apparatus of FIG. 5.

Referring to FIGS. 5 and 6, the clearance C between the punch 110 and the die 120 may be 3 µm. In this case, the pressure measured by the pressure measurement member 130 may be measured to be lower than the target pressure.

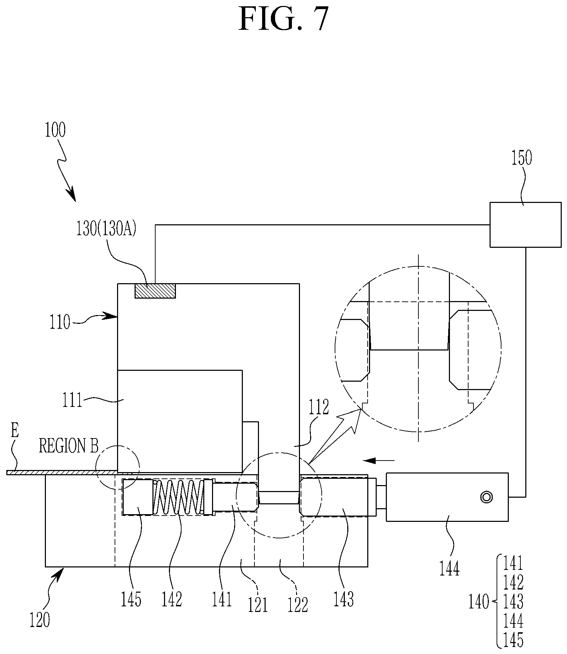

FIG. 7 is a view showing a process in which a position of the punch is adjusted by the clearance adjustment unit.

Referring to FIG. 7, the control unit 150 may control the clearance adjustment unit 140 to reduce the clearance C between the punch 110 and the die 120. In more detail, the second pressing member 143 of the clearance adjustment unit 140 may be slightly moved to be closer to the first pressing member 141 (or the left side in the direction shown in the drawing).

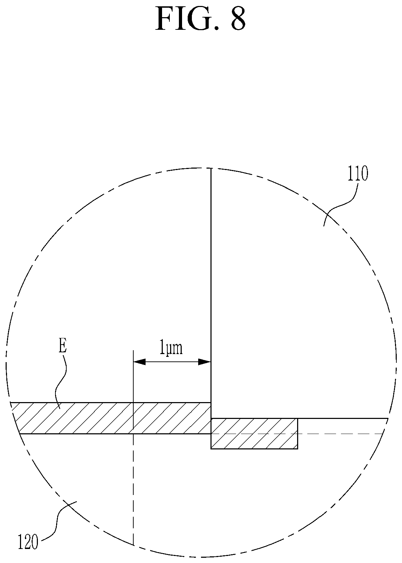

According to some embodiments, the punch 110 may be lifted again and then lowered again. The guide part 112 of the punch 110 may have the right side in contact with the second pressing member 143, which is slightly moved, and have the clearance C between the punch 110 and the die 120 may become the appropriate clearance of 1 µm (see FIG. 8).

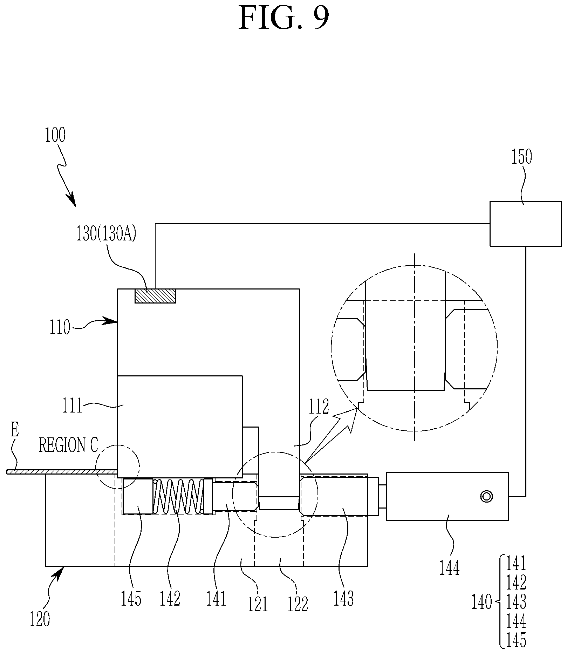

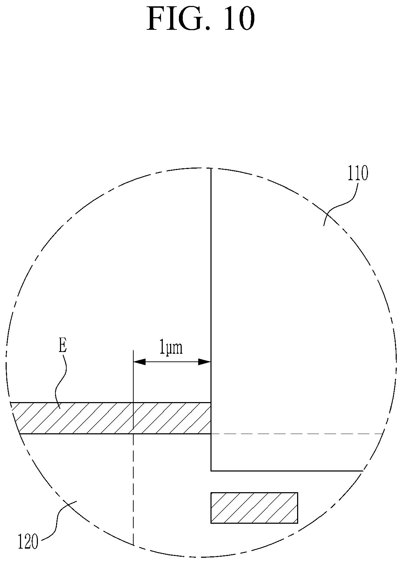

As shown in FIGS. 9 and 10, the electrode plate E may then be cut in a state where the clearance C between the punch 110 and the die 120 maintains the appropriate clearance.

According to some embodiments, the pressure measured by the pressure measurement member 130 may be measured to be higher than the target pressure while a large load is applied to the punch 110 when the clearance C between the punch 110 and the die 120 is less than 1 µm.

Here, the control unit 150 may control the clearance adjustment unit 140 to increase the clearance C between the punch 110 and the die 120. In more detail, the second pressing member 143 of the clearance adjustment unit 140 may be slightly moved to be further away from the first pressing member 141.

The punch 110 may then be lifted again and then lowered again. The guide part 112 of the punch 110 may have the right side in contact with the second pressing member 143, which is slightly moved, and have the left side always pressed by the first pressing member 141. Therefore, the clearance C between the punch 110 and the die 120 may become the appropriate clearance of 1 µm.

Meanwhile, the electrode plate included in a general electrode assembly may be manufactured, for example, in a way of leaving a shape (e.g., a set or predetermined shape) on a metal plate by using a mold unit. As described above, the clearance C between the punch 110 and the die 120 may be maintained within a target value range by the electrode plate processing apparatus 100 according to some embodiments of the present disclosure, thereby reducing a defect rate in manufacturing the electrodes. In this way, it may also be possible to secure relatively improved productivity.

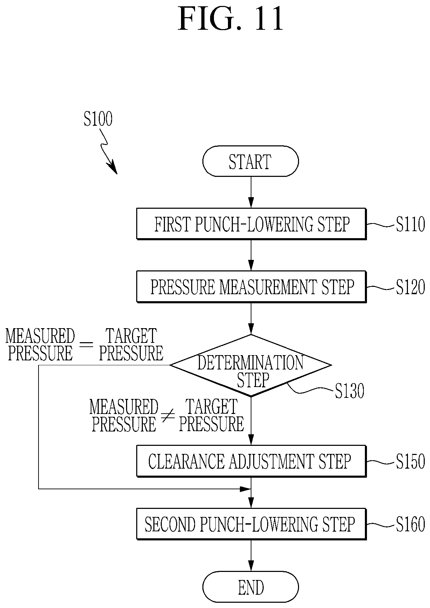

FIG. 11 is a flowchart showing an electrode plate processing method according to an implementation of the present disclosure. For example, in some embodiments, there may be additional operations or the order of the operations may vary, unless otherwise implied or expressly stated, without departing from the scope of embodiments according to the present disclosure.

Referring to FIG. 11, an electrode plate processing method (S100) includes a first punch-lowering operation (S110), a pressure measurement operation (S120), a determination operation (S130), a clearance adjustment operation (S150), and a second punch-lowering operation (S160).

The first punch-lowering operation (S110) is an operation of lowering the punch. In the first punch-lowering operation (S110), a position where the punch is lowered may be a position where the punch may cut the electrode plate. Alternatively, in the first punch-lowering operation (S110), the position where the punch is lowered may be a position where the punch and the die may be in contact with each other. In other words, in the first punch-lowering operation (S110) the punch is lowered into the die, e.g. into the accommodation space of the die.

The pressure measurement operation (S120) is an operation of measuring the pressure applied to one selected from the punch and the die in the process in which the punch is lowered. The pressure measurement operation (S120) may be performed by the pressure measurement member (130) described above. That is, the pressure measurement member (130) is configured to perform the pressure measurement operation (S120). In the pressure measurement operation (S120), the pressure applied to one of the punch and the die may be measured as described above.

The determination operation (S130) is an operation of determining a clearance state by comparing the target pressure with the pressure measured in the pressure measurement operation (S120). In the determination operation (S130), the current clearance may be determined to have a larger value (e.g. of more than 2 µm) than the appropriate clearance (e.g. about 1 µm to 2 µm) when the measured pressure is less than the target pressure. On the other hand, in the determination operation (S130), the current clearance may be determined to have a smaller value (e.g. of less than 1 µm) than the appropriate clearance when the measured pressure is more than the target pressure. An appropriate clearance may not be necessarily limited to the range of about 1 µm to 2 µm, and may depend on a design of the electrode plate.

The determination operation (S130) may be performed by the control unit described above. That is, the control unit (150) described above is configured to perform the determination operation (S130).

The clearance adjustment operation (S150) is an operation of adjusting the clearance between the punch and the die based on the result of comparing the measured pressure with the target pressure. As described above, in the clearance adjustment operation (S150), the clearance may be adjusted in such a way that the punch is moved to the left or right side based on the direction shown in the drawing as the second pressing member of the clearance adjustment unit is moved. The clearance adjustment unit 140 as described above is configured to perform the clearance adjustment operation (S150). The punch may be lifted after the clearance is adjusted.

The second punch-lowering operation (S160) is an operation of lowering the punch. In the clearance adjustment operation (S150), the clearance may be adjusted to the appropriate clearance, and in this state, the electrode plate may be stably cut while the punch is lowered.

According to an implementation of electrode plate processing method (S100), the second punch-lowering operation (S160) may be performed without performing the clearance adjustment operation (S150) when the pressure measured in the pressure measurement operation (S120) described above is the same as the target pressure. Alternatively, the clearance adjustment operation (S150) may be performed to increase or reduce the clearance when the pressure measured in the pressure measurement operation (S120) is different from the target pressure.

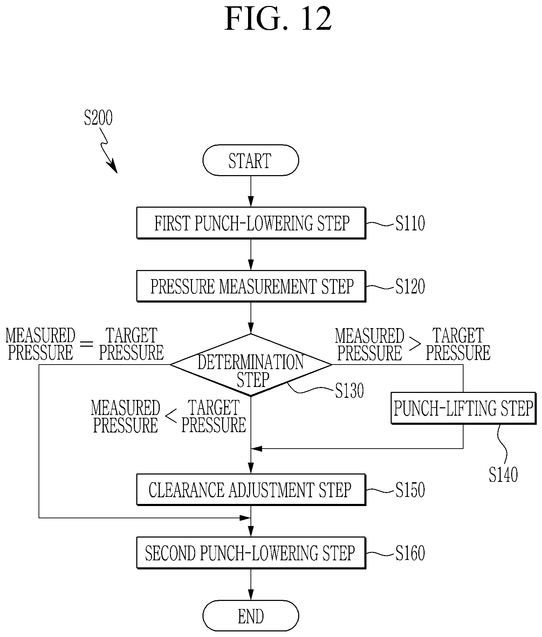

FIG. 12 is a flowchart showing an electrode plate processing method in another example of the present disclosure.

Referring to FIG. 12, an electrode plate processing method (S200) in another example of the present disclosure may further include a punch-lifting operation (S140).

In the afore-mentioned electrode plate processing method (S100, see FIG. 11), the punch may be lowered regardless of the measured pressure. However, in the electrode plate processing method (S200) of another example in the present disclosure, the punch-lifting operation of lifting the punch may be performed when the pressure measured in the pressure measurement operation (S120) is more than the target pressure. In more detail, the clearance adjustment operation (S150) may be performed to increase the clearance after the punch-lifting operation (S140) is performed when the pressure measured in the pressure measurement operation (S120) is more than the target pressure.

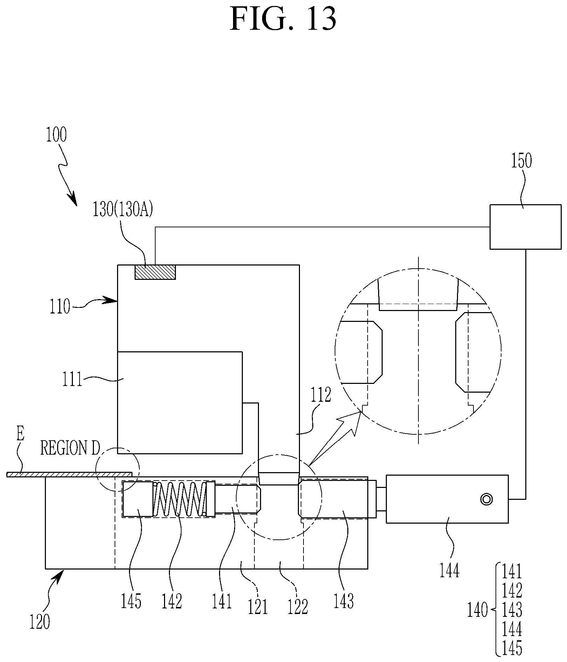

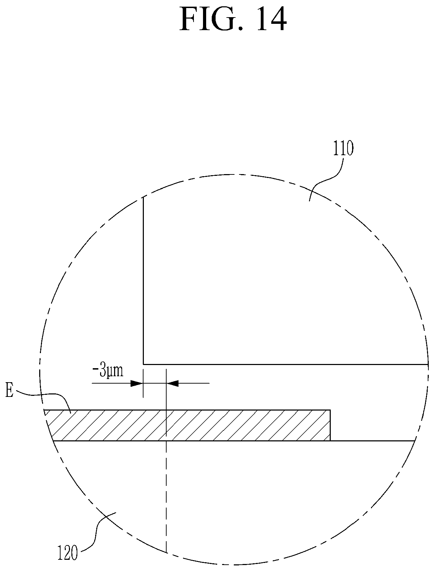

Referring to FIGS. 13 and 14, the measured pressure more than the target pressure may include the cases where the clearance C between the punch 110 and the die 120 is excessively high or low, as well as the cases where the punch 110 and the die 120 interfere with each other. The punch 110 and the die 120 may be damaged when the punch 110 is continuously lowered while the punch 110 and the die 120 are arranged to interfere with each other.

Therefore, the damage to the punch 110 or the die 120 may be prevented or reduced by lowering the punch 110 only until the punch 110 comes into contact with the die 120, then measuring the pressure applied to the punch 110 or the die 120, and lifting the punch 110 rather than continuously lowering the punch 110 when the measured pressure is more than the target pressure.

Alternatively, the clearance adjustment operation (S150) may be performed to reduce the clearance C when the pressure measured in the pressure measurement operation (S120) is less than the target pressure.

A detailed operation of the electrode plate processing method (S200) in another example of the present disclosure is described in detail while describing the electrode plate processing apparatus 100 (see FIG. 1) described above. Therefore, a detailed description thereof is omitted.

Although aspects of some embodiments of the present disclosure have been described above, the accompanying drawings and detailed description of the present disclosure described above are merely illustrative and used only to explain the present disclosure, and are not intended to limit the scope of protection as set forth in the claims. Therefore, it will be understood by those skilled in the art that various modifications and other equivalent embodiments may be derived from the present disclosure.

### List of Reference Signs

100: electrode plate processing apparatus
110: punch
111: cutting part
112: guide part
120: die
121: accommodation space
122: adjustment space
130: pressure measurement member
140: clearance adjustment unit
141: first pressing member
142: elasticity member
143: second pressing member
144: power generating member
145: sealing member
150: control unit
C: clearance

## Claims

1. An electrode plate processing apparatus (100) comprising:
a punch (110) configured to cut an electrode plate;
a die (120) configured to seat the electrode plate thereon and to accommodate the punch (110);
a pressure measurement member (130, 130A, 130B) installed on at least one of the punch (110) or the die (120), and configured to measure a pressure applied to the punch (110) or the die (120) in a process in which the punch (110) is lowered;
a clearance adjustment unit (140) installed on the die (120), and configured to adjust a clearance between the punch (110) and the die (120) by pressing the punch (110); and
a control unit (150) configured to control an operation of the clearance adjustment unit (140) based on the pressure measured by the pressure measurement member (130, 130A, 130B).

2. The apparatus as claimed in claim 1, wherein the punch (110) comprises:
a cutting part (111) configured to cut the electrode plate, and
a guide part (112) attached to at least one side of the cutting part (111) and configured to be moved together with the cutting part (111) based on an external force being applied thereto.

3. The apparatus as claimed in claim 2, wherein the die (120) comprises:
an accommodation space (121) for accommodating the punch (110), and
an adjustment space (122) for accommodating the guide part (112).

4. The apparatus as claimed in one of claims 2 or 3, wherein the guide part (112) is contactable with the clearance adjustment unit (140).

5. The apparatus as claimed in at least one of claims 2 to 4, wherein the guide part may comprise a contacting part configured to be directly contactable with the clearance adjustment unit, and the contacting part has a tapered end.

6. The apparatus as claimed in one of the preceding claims, wherein the clearance adjustment unit (140) comprises:
a first pressing member (141) configured to press against one side of the punch (110) in a first direction,
an elastic member (142) configured to generate an elastic force toward the first pressing member (141),
a second pressing member (143) spaced apart from the first pressing member (141) and configured to press against the punch (110) in a second direction opposite to the first direction, and
a power generating member (144) configured to reciprocate the second pressing member (143) to be moved to be closer to or further away from the first pressing member (141).

7. The apparatus as claimed in claim 6, wherein at least a portion of an end of the first pressing member (141) is exposed to the adjustment space (122).

8. The apparatus as claimed in at least one of the preceding claims, wherein the control unit (150) is further configured to control the clearance adjustment unit (140) to increase the clearance between the punch (110) and the die (120) based on the pressure measured by the pressure measurement member (130, 130A, 130B) being equal to or deviating from a target pressure.

9. The apparatus as claimed in at least one of the preceding claims, further comprising a plurality of the pressure measurement member (130, 130A, 130B) being installed on both the punch (110) and the die (120).

10. A manufacturing method for an electrode plate, the method comprising:
lowering a punch (110) a first time;
measuring a pressure applied to at least one of the punch (110) or a die (120);
determining a clearance state by comparing a target pressure with the measured pressure;
adjusting a clearance between the punch (110) and the die (120) based on the clearance state; and
lowering the punch (110) a second time.

11. The method as claimed in claim 10, wherein the punch (110) is lowered the second time without adjusting the clearance based on the measured pressure being equal to the target pressure.

12. The method as claimed in claim 10, wherein adjusting the clearance comprises increasing or reducing the clearance when the measured pressure is different from the target pressure.

13. The method as claimed in claim 12, wherein adjusting the clearance comprises reducing the clearance based on the measured pressure being lower than the target pressure.

14. The method as claimed in claim 10, further comprising lifting the punch (110) based on the measured pressure being higher than the target pressure.

15. The method as claimed in claim 14, wherein adjusting the clearance comprises increasing the clearance after lifting the punch (110) based on the measured pressure being higher than the target pressure.

## Patentansprüche

1. Vorrichtung (100) zur Elektrodenplattenverarbeitung, umfassend:
einen Stempel (110), der zum Schneiden einer Elektrodenplatte konfiguriert ist;
eine Matrize (120), die dazu konfiguriert ist, die Elektrodenplatte darauf aufzusetzen und den Stempel (110) aufzunehmen;
ein Druckmesselement (130, 130A, 130B), das an mindestens einem von dem Stempel (110) und der Matrize (120) angebracht und dazu konfiguriert ist, einen auf den Stempel (110) oder die Matrize (120) ausgeübten Druck in einem Prozess zu messen, in dem der Stempel (110) abgesenkt wird;
eine Spieleinstelleinheit (140), die an der Matrize (120) angebracht und dazu konfiguriert ist, ein Spiel zwischen dem Stempel (110) und der Matrize (120) durch Drücken des Stempels (110) einzustellen; und
eine Steuereinheit (150), die dazu konfiguriert ist, den Betrieb der Spieleinstelleinheit (140) auf der Grundlage des von dem Druckmesselement (130, 130A, 130B) gemessenen Drucks zu steuern.

2. Vorrichtung nach Anspruch 1, wobei der Stempel (110) Folgendes umfasst:
ein Schneidteil (111), das zum Schneiden der Elektrodenplatte konfiguriert ist, und
ein Führungsteil (112), das an mindestens einer Seite des Schneidteils (111) angebracht und dazu konfiguriert ist, zusammen mit dem Schneidteil (111) auf der Grundlage einer darauf ausgeübten äußeren Kraft bewegt zu werden.

3. Vorrichtung nach Anspruch 2, wobei die Matrize (120) Folgendes umfasst:
einen Aufnahmeraum (121) zur Aufnahme des Stempels (110) und
einen Einstellraum (122) zur Aufnahme des Führungsteils (112).

4. Vorrichtung nach einem der Ansprüche 2 oder 3, wobei das Führungsteil (112) mit der Spieleinstelleinheit (140) in Kontakt bringbar ist.

5. Vorrichtung nach mindestens einem der Ansprüche 2 bis 4, wobei das Führungsteil ein Kontaktteil umfassen kann, das so konfiguriert ist, dass es direkt mit der Spieleinstelleinheit in Kontakt bringbar ist, und das Kontaktteil ein konisch zulaufendes Ende aufweist.

6. Vorrichtung nach einem der vorstehenden Ansprüche, wobei die Spieleinstelleinheit (140) Folgendes umfasst:
ein erstes Druckelement (141), das dazu konfiguriert ist, in einer ersten Richtung gegen eine Seite des Stempels (110) zu drücken,
ein elastisches Element (142), das dazu konfiguriert ist, eine elastische Kraft in Richtung des ersten Druckelements (141) zu erzeugen,
ein zweites Druckelement (143), das von dem ersten Druckelement (141) beabstandet und dazu konfiguriert ist, in einer zweiten Richtung, die der ersten Richtung entgegengesetzt ist, gegen den Stempel (110) zu drücken, und
ein Leistungserzeugungselement (144), das so konfiguriert ist, dass es das zweite Druckelement (143) hin- und herbewegt, um es näher an das erste Druckelement (141) heran oder weiter von diesem weg zu bewegen.

7. Vorrichtung nach Anspruch 6, wobei zumindest ein Abschnitt eines Endes des ersten Druckelements (141) zum Einstellraum (122) hin freiliegt.

8. Vorrichtung nach mindestens einem der vorstehenden Ansprüche, wobei die Steuereinheit (150) ferner dazu konfiguriert ist, die Spieleinstelleinheit (140) zu steuern, um das Spiel zwischen dem Stempel (110) und der Matrize (120) zu vergrößern, basierend darauf, dass der vom Druckmesselement (130, 130A, 130B) gemessene Druck gleich einem Zieldruck ist oder von diesem abweicht.

9. Vorrichtung nach mindestens einem der vorstehenden Ansprüche, umfassend ferner eine Vielzahl von Druckmesselementen (130, 130A, 130B), die sowohl am Stempel (110) als auch an der Matrize (120) angebracht sind.

10. Verfahren zur Herstellung einer Elektrodenplatte, wobei das Verfahren Folgendes umfasst:
Absenken eines Stempels (110) zum ersten Mal;
Messen eines Drucks, der auf mindestens eines von dem Stempel (110) und einer Matrize (120) ausgeübt wird;
Bestimmen eines Spielzustands durch Vergleichen eines Zieldrucks mit dem gemessenen Druck;
Einstellen eines Spiels zwischen dem Stempel (110) und der Matrize (120) auf der Grundlage des Spielzustands; und
Absenken des Stempels (110) zum zweiten Mal.

11. Verfahren nach Anspruch 10, wobei der Stempel (110) zum zweiten Mal abgesenkt wird, ohne das Spiel basierend darauf einzustellen, dass der gemessene Druck gleich dem Zieldruck ist.

12. Verfahren nach Anspruch 10, wobei das Einstellen des Spiels das Vergrößern oder Verringern des Spiels umfasst, wenn der gemessene Druck vom Zieldruck abweicht.

13. Verfahren nach Anspruch 12, wobei das Einstellen des Spiels das Verringern des Spiels basierend darauf umfasst, dass der gemessene Druck niedriger als der Zieldruck ist.

14. Verfahren nach Anspruch 10, umfassend ferner das Anheben des Stempels (110) basierend darauf, dass der gemessene Druck höher als der Zieldruck ist.

15. Verfahren nach Anspruch 14, wobei das Einstellen des Spiels das Vergrößern des Spiels nach dem Anheben des Stempels (110) basierend darauf umfasst, dass der gemessene Druck höher ist als der Zieldruck.

## Revendications

1. Appareil de traitement de plaque d'électrode (100) comportant :
un poinçon (110) configuré pour couper une plaque d'électrode ;
une matrice (120) configurée pour accueillir la plaque d'électrode sur celle-ci et pour recevoir le poinçon (110) ;
un organe de mesure de pression (130, 130A, 130B) installé sur au moins l'un parmi le poinçon (110) ou la matrice (120), et configuré pour mesurer une pression appliquée sur le poinçon (110) ou la matrice (120) dans un processus dans lequel le poinçon (110) est abaissé ;
une unité d'ajustement de jeu (140) installée sur la matrice (120), et configurée pour ajuster un jeu entre le poinçon (110) et la matrice (120) par pressage du poinçon (110) ; et
une unité de commande (150) configurée pour commander un fonctionnement de l'unité d'ajustement de jeu (140) sur la base de la pression mesurée par l'organe de mesure de pression (130, 130A, 130B).

2. Appareil selon la revendication 1, dans lequel le poinçon (110) comporte :
une partie de coupe (111) configurée pour couper la plaque d'électrode, et
une partie de guidage (112) fixée à au moins un côté de la partie de coupe (111) et configurée pour être déplacée conjointement avec la partie de coupe (111) sur la base d'une force externe qui est appliquée sur celle-ci.

3. Appareil selon la revendication 2, dans lequel la matrice (120) comporte :
un espace de logement (121) pour le logement du poinçon (110), et
un espace d'ajustement (122) pour le logement de la partie de guidage (112).

4. Appareil selon l'une des revendications 2 ou 3, dans lequel la partie de guidage (112) peut être mise en contact avec l'unité d'ajustement de jeu (140).

5. Appareil selon au moins l'une des revendications 2 à 4, dans lequel la partie de guidage peut comporter une partie de contact configurée pour pouvoir être directement mise en contact avec l'unité d'ajustement de jeu, et la partie de contact possède une extrémité effilée.

6. Appareil selon l'une des revendications précédentes, dans lequel l'unité d'ajustement de jeu (140) comporte :
un premier organe de pressage (141) configuré pour presser contre un côté du poinçon (110) dans une première direction,
un organe élastique (142) configuré pour générer une force élastique vers le premier organe de pressage (141),
un deuxième organe de pressage (143) espacé du premier organe de pressage (141) et configuré pour presser contre le poinçon (110) dans une deuxième direction opposée à la première direction, et
un organe de génération d'énergie (144) configuré pour conférer un mouvement de va- et-vient au deuxième organe de pressage (143) afin qu'il soit déplacé pour être plus proche ou plus éloigné du premier organe de pressage (141).

7. Appareil selon la revendication 6, dans lequel au moins une portion d'une extrémité du premier organe de pressage (141) est exposée à l'espace d'ajustement (122).

8. Appareil selon au moins l'une des revendications précédentes, dans lequel l'unité de commande (150) est en outre configurée pour commander l'unité d'ajustement de jeu (140) pour augmenter le jeu entre le poinçon (110) et la matrice (120) sur la base du fait que la pression mesurée par l'organe de mesure de pression (130, 130A, 130B) est égale à une pression cible ou s'écarte de celle-ci.

9. Appareil selon au moins l'une des revendications précédentes, comportant en outre une pluralité d'organes de mesure de pression (130, 130A, 130B) qui sont installés à la fois sur le poinçon (110) et sur la matrice (120).

10. Procédé de fabrication d'une plaque d'électrode, le procédé comportant :
l'abaissement d'un poinçon (110) une première fois ;
la mesure d'une pression appliquée sur au moins l'un parmi le poinçon (110) ou une matrice (120) ;
la détermination d'un état de jeu par comparaison d'une pression cible avec la pression mesurée ;
l'ajustement d'un jeu entre le poinçon (110) et la matrice (120) sur la base de l'état de jeu ; et
l'abaissement du poinçon (110) une deuxième fois.

11. Procédé selon la revendication 10, dans lequel le poinçon (110) est abaissé la deuxième fois sans ajuster le jeu sur la base du fait que la pression mesurée est égale à la pression cible.

12. Procédé selon la revendication 10, dans lequel l'ajustement du jeu comporte une augmentation ou une réduction du jeu lorsque la pression mesurée est différente de la pression cible.

13. Procédé selon la revendication 12, dans lequel l'ajustement du jeu comporte une réduction du jeu sur la base du fait que la pression mesurée est inférieure à la pression cible.

14. Procédé selon la revendication 10, comportant en outre le levage du poinçon (110) sur la base du fait que la pression mesurée est supérieure à la pression cible.

15. Procédé selon la revendication 14, dans lequel l'ajustement du jeu comporte une augmentation du jeu après le levage du poinçon (110) sur la base du fait que la pression mesurée est supérieure à la pression cible.
